(19) **Europäisches Patentamt**
**European Patent Office**
**Office européen des brevets**

(11) **EP 4 552 758 A1**

(12) # EUROPÄISCHE PATENTANMELDUNG

(43) Veröffentlichungstag:
**14.05.2025   Patentblatt 2025/20**

(21) Anmeldenummer: **24209766.5**

(22) Anmeldetag: **30.10.2024**

(51) Internationale Patentklassifikation (IPC):
***B08B 7/02*** (2006.01)     ***B29C 64/35*** (2017.01)

(52) Gemeinsame Patentklassifikation (CPC):
**B08B 7/02; B29C 64/35;** B29C 64/153;
B29C 64/379

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **06.11.2023   DE 102023130611**

(71) Anmelder: **Rösler Holding GmbH
96231 Bad Staffelstein (DE)**

(72) Erfinder:
• **MERKEL, Till
89231 Neu-Ulm (DE)**
• **MÜLLER, Florian
96106 Ebern (DE)**
• **BRAUNROTH, Domenik
96450 Coburg (DE)**
• **BECK, Moritz
96231 Bad Staffelstein (DE)**

(74) Vertreter: **Manitz Finsterwald
Patent- und Rechtsanwaltspartnerschaft mbB
Martin-Greif-Strasse 1
80336 München (DE)**

(54) **VERFAHREN UND VORRICHTUNG ZUM ENTPULVERN VON ADDITIV GEFERTIGTEN BAUTEILEN**

(57)     Zum Entpulvern von in einem Pulverkuchen befindlichen additiv gefertigten Bauteilen wird der Pulverkuchen zunächst in eine Einfassung transferiert und anschlie-ßend in einer Entpulverungsstation innerhalb der Einfassung in vertikale Schwingungen versetzt.

**EP 4 552 758 A1**

## Beschreibung

Die vorliegende Erfindung betrifft Verfahren und Vorrichtungen zum Entpulvern von in einem Pulverkuchen befindlichen, additiv gefertigten Bauteilen.

Als Ergebnis pulverbettbasierter Verfahren zur Herstellung von Bauteilen über additive Fertigung (z.B. SLS, MJF, SAF, Binderjetting) entstehen sogenannte Baujobs. Ein Baujob besteht aus den Bauteilen, die im Prozess aus Pulverpartikeln verfestigt werden, teilverfestigtem Pulver und nicht verfestigtem Pulver. Diese Bestandteile entstehen und befinden sich nach Abschluss des Herstellungsprozesses in einem Baujobbehälter. Abhängig von den Herstellerparametern (Pulverart, Qualität des Pulvers, Partikelgrößenverteilung, Temperaturführung, Schmelzbereiche des Materials, etc.) liegt auch das nicht verfestigte und damit wiederverwendbare Pulver in kleineren und auch größere Agglomeraten vor. Diese prozessbedingte Agglomeration kann so weit reichen, dass eine Auftrennung des Baujobs in seine Bestandteile nur durch starke mechanische Einwirkung gelingt.

Aus diesem Grund finden sich im Stand der Technik verschiedene Verfahren, bei denen dem Separierprozess (Trennung der Bauteile von den teilverfestigten und nicht verfestigten Pulverbestandteilen) ein Prozessschritt vorgelagert ist, der dem Aufbrechen des vollständig oder teilweise kompaktierten Baujobs dient. Bei einem bekannten Verfahren wird der Baujob aus dem Baujobbehälter mit großer Fallhöhe frei in ein Entpulverungsvolumen entleert. Beim Auftreffen auf den Boden des Entpulverungsvolumen bricht der Baujob (Pulverkuchen) dann ungeordnet und nicht reproduzierbar auseinander. Bei einem anderen bekannten Verfahren ist in einen Entpulverungsraum eine Fallstufe integriert, die ebenfalls zum ungeordneten und damit nicht reproduzierbaren Aufbrechen des Pulverkuchens führen soll. Bei den im Stand der Technik beschriebenen Verfahren folgt dann die eigentliche Auftrennung, bei der durch eine Kombination von Druckluft, Staubabsaugung und Vibration die Bauteile von teilverfestigten und nicht verfestigtem Pulver getrennt werden.

In der EP 3 565 706 A ist eine Auspackeinheit offenbart, in der der Baujob (Bauteile im Pulverkuchen) durch Vibration des Baujobbehälters in die Bestandteile Pulver und Bauteile aufgetrennt werden soll. Diese Auspackeinheit kann an eine Pulverabtrennungseinheit gekoppelt werden. Bei größeren Baujobs oder bei Baujobs mit einer hohen Verfestigung des Pulverkuchens ist jedoch eine Separierung der Bauteile vom Restpulver in einem derartigen Aufbau nicht gewährleistet. Das Aufbrechen des Baujobs erfolgt ungeregelt und nicht reproduzierbar, die Agglomerate lassen sich nicht zuverlässig trennen, und die Baujobbehälter sind bei großen Baujobs zu massiv bzw. bei kleinen Baujobs zu leicht und empfindlich, um allein über Vibration eine große Bandbreite von Bauteilen (einfach bis komplex) beschädigungsfrei und vollständig zu separieren und gleichzeitig zu verhindern, dass der Baujobbehälter dabei mechanisch überbeansprucht oder beschädigt wird.

Es ist die Aufgabe der vorliegenden Erfindung, ein Verfahren und eine Vorrichtung zu schaffen, die eine einfache, zuverlässige, reproduzierbare und auch wirtschaftliche Separierung der Bauteile aus dem Pulverkuchen ermöglichen.

Die Lösung dieser Aufgabe erfolgt durch die Merkmale der unabhängigen Ansprüche.

Bei einem erfindungsgemäßen Verfahren zum Entpulvern von in einem Pulverkuchen befindlichen, additiv gefertigten Bauteilen wird der Pulverkuchen zunächst in eine Einfassung transferiert und dann in einer Entpulverungsstation innerhalb der Einfassung durch einen Schwingungserzeuger ausschließlich in vertikaler Richtung in Schwingungen versetzt.

Durch das Übertragen des gesamten Pulverkuchens aus einem Baujobbehälter ergibt sich zunächst der Vorteil, dass das Verfahren unabhängig von der Größe und Beschaffenheit des Baujobbehälters durchgeführt werden kann, da dieser selbst nicht vibriert wird. Weiterhin wird bei dem erfindungsgemäßen Verfahren ein Schwingungserzeuger verwendet, der so ausgebildet und angeordnet ist, dass dieser den Pulverkuchen ausschließlich in vertikaler Richtung in Schwingungen versetzt (Vertikalschwinger). Hierbei wird unter einem Vertikalschwinger erfindungsgemäß ein solcher verstanden, dessen Amplitude zu einem ganz überwiegenden Teil in vertikaler Richtung verläuft, d.h. Transversalschwingungen in horizontaler Richtung sind allenfalls in einem zu vernachlässigenden Anteil vorhanden.

Erfindungsgemäß hat sich nun herausgestellt, dass ein Einleiten von ausschließlich vertikalen Schwingungen in den Pulverkuchen bei Anpassung von Frequenz und Amplitude der Schwingungen erfolgreich dazu verwendet werden kann, bei der Entpulverung erforderliche Prozessphasen zu durchlaufen, beispielsweise das Aufbrechen des Baujobs in Bruchstücke, das Deagglomerieren der Bruchstücke, das Pulverisieren des am Baujob anhaftenden nicht oder teilverfestigten Pulvermaterials oder auch das Fluidisieren des Pulvers. Zur effektiven Durchführung dieser Prozessphasen können für jede dieser Prozessphasen Parameter in einem festgelegten Prozessfenster definiert werden, die an die Eigenschaften des jeweiligen Baujobs angepasst sind.

So kann beispielsweise in der Prozessphase Fluidisieren das lose Pulver durch eine Reduzierung der Schüttdichte in einen fließfähigen Zustand überführt werden. Auch ist es durch geeignete Wahl von Frequenz und Amplitude des Vertikalschwingers möglich, beim Fluidisieren das lose Pulver zunächst zu vereinzeln und dann durch Anpassung von Frequenz und Amplitude in seiner Schüttdichte gegenüber dem Ausgangszustand im noch kompakten Baujob zu reduzieren. Auch ist es möglich, beim Fluidisieren das Ausgangsvolumen des Pulvers zu steigern, wobei in Abhängigkeit von der Beschaffenheit des Pulvers und der Größe des Volumens des Pulverkuchens um etwa +/-20% möglich ist.

Vorteilhafte Ausführungsformen der Erfindung sind in der Beschreibung, der Zeichnung sowie den Unteransprüchen beschrieben.

Nach einer ersten vorteilhaften Ausführungsform kann der Pulverkuchen mittels einer Hubeinrichtung aus einem Baujobbehälter in die Einfassung überführt werden. Die Hubeinrichtung kann dabei beispielsweise einen Vertikalhub (von oben oder von unten) oder auch einen Horizontalhub (von der Seite) durchführen, wobei der Pulverkuchen beispielsweise mit Hilfe einer Hubplatte oder einer Schubplatte aus dem Baujobbehälter in die Einfassung überführt werden kann.

Bei der Einfassung handelt es sich um eine Art Gehäuse, das den Baujob an allen Seiten umgibt, wobei das Volumen zwischen den Außenflächen des Baujobs und den Seitenwänden der Einfassung möglichst minimiert ist. Hierdurch wird das Bauvolumen während des Transports des Pulverkuchens und auch zu Beginn und auch während des Entpulverungsvorgangs konstant gehalten, was sich als besonders vorteilhaft herausgestellt hat

Weiterhin kann es vorteilhaft sein, wenn der Pulverkuchen innerhalb der Einfassung mit einer Deckplatte beaufschlagt wird. Erfolgt dies während einer Überführung des Pulverkuchens zu der Entpulverungsstation, so ist der Pulverkuchen während des Transports in der Einfassung sicher gehalten. Wenn der Pulverkuchen in der Entpulverungsstation während des Entpulverns mit einer Deckplatte beaufschlagt wird, lässt sich der Druck auf den Pulverkuchen und auch das Volumen innerhalb der Einfassung geeignet variieren, um die einzelnen Prozessphasen optimal durchzuführen.

Nach einer weiteren vorteilhaften Ausführungsform kann die Einfassung mit einem darin befindlichen Pulverkuchen von einer Transporteinrichtung in die Entpulverungsstation überführt werden. Hierdurch wird das Entpulvern vollständig unabhängig von dem Baujobbehälter durchgeführt und der Entpulverungsvorgang findet in der Entpulverungsstation ausschließlich innerhalb der Einfassung statt. Hierbei bleibt der Baujob in Form, Festigkeit und Geometrie bis zum Beginn des Entpulverungsvorgangs unverändert, so dass die Ausgangsparameter des Baujobs (Gewicht, Form, Dichte und Geometrie) ebenfalls unverändert bleiben. Entsprechend können die erforderlichen Prozessparameter bei den verschiedenen Prozessphasen ausgehend von den Parametern des ursprünglichen Baujobs passend gewählt werden. Auch nach dem Entpulverungsvorgang kann sich das in der Entpulverungsstation vom Baujob gelöste Pulver noch vollständig innerhalb der Einfassung befinden.

Nach einer weiteren vorteilhaften Ausführungsform können die Deckplatte und/oder die Seitenwände der Einfassung jeweils orthogonal zum Pulverkuchen verstellbar sein, so dass das Volumen innerhalb der Einfassung verändert und an einen jeweiligen Pulverkuchen angepasst werden kann. Hierbei kann es vorteilhaft sein, wenn das Volumen innerhalb der Einfassung während des Transports um maximal etwa 10% größer ist als das Volumen des Pulverkuchens.

Nach einer weiteren vorteilhaften Ausführungsform kann das Überführen des Pulverkuchens in die Entpulverungsstation dadurch erfolgen, dass der sich in der Einfassung befindliche Pulverkuchen über einen Transporttisch geschoben wird, indem die Einfassung in der Horizontalen verschoben wird. Es ist allerdings auch möglich, die Einfassung mit einem Boden zu versehen.

Nach einer weiteren vorteilhaften Ausführungsform kann die Einfassung in der Entpulverungsstation an einer Schwingplatte verankert werden, an der sich der Schwingungserzeuger befindet. So kann die Entpulverungsstation beispielsweise eine auf Federn gelagerte Schwingplatte aufweisen, an deren Unterseite der Vertikalschwinger montiert ist, der beispielsweise zwei gegensinnig rotierende Vibromotoren umfassen kann. Das Verankern der Einfassung mit der Schwingplatte kann beispielsweise durch hydraulisch oder pneumatisch aktivierte Klemmhebel erfolgen, so dass bei einer Vibration der Schwingplatte keine Relativbewegung zwischen der Einfassung und der Schwingplatte stattfindet.

Da die Schwingplatte vorzugsweise auf Federn gelagert ist, wird sich diese nach Überführen des Pulverkuchens auf die Schwingplatte aufgrund des Gewichts des Pulverkuchens etwas absenken. Deshalb kann es vorteilhaft sein, wenn an der Entpulverungsstation zumindest ein Stellglied vorgesehen ist, mit dem die Schwingplatte in der Höhe etwas angehoben werden kann, um ein stufenfreies Rückführen des Inhalts der Einfassung aus der Entpulverungsstation heraus sicherzustellen.

Nach einer weiteren vorteilhaften Ausführungsform kann es vorteilhaft sein, wenn die entpulverten Bauteile nach der Entpulverung gewogen werden, da hierdurch ein Rückschluss auf den Entpulverungsgrad gezogen werden kann, was zur Qualitätssicherung vorteilhaft ist. Hierbei kann es auch vorteilhaft sein, wenn der Pulverkuchen vor der Entpulverung gewogen wird und/oder das von den Bauteilen entfernte Pulver gewogen wird.

Mit dem erfindungsgemäßen Verfahren lassen sich mit einer einzigen Vorrichtung verschiedenste Prozessphasen und insbesondere zumindest drei der eingangs genannten Prozessphasen durchlaufen, wobei zur Entpulverung in allen Fällen ausschließlich ein Vibrieren des Pulverkuchens durchgeführt wird, d.h. das erfindungsgemäße Verfahren umfasst keine sonstigen Maßnahmen zum Entpulvern, wie beispielsweise Fallenlassen, Beaufschlagen mit Druckluft, Rotieren der Bauteile in einer Kammer oder dergleichen.

Zum Durchlaufen der einzelnen Prozessphasen werden Frequenz und Amplitude des Vertikalschwingers durch eine Steuerung geeignet eingestellt. Hierbei ist es auch möglich, Frequenz und Amplitude des Vertikalschwingers derart einzustellen, dass die Bauteile auf dem von den Bauteilen gelöstem Pulver aufschwimmen, so dass die Bauteile leicht separiert werden können. Hierbei kann es auch vorteilhaft sein, wenn die Bauteile, insbesondere die aufgeschwommenen Bauteile, über eine Entnahmevorrichtung aus der Einfassung entnommen werden. Alternativ ist natürlich auch eine manuelle Entnahme möglich.

Nach einer weiteren vorteilhaften Ausführungsform kann die Einfassung von einer Transporteinrichtung in eine Pulverentnahmestation überführt werden, in der erst das von den Bauteilen gelöste Pulver aus der Einfassung abgezogen wird. In der Entpulverungsstation wird bei dieser Ausführungsvariante also kein Pulver abgezogen. Wenn beispielsweise das von dem mindestens einen Bauteil entfernte Pulver in der Entpulverungsstation bereits fluidisiert worden ist, kann dieses Pulver in der Pulverentnahmestation über dort vorgesehene Öffnungen nach unten abfließen. Hierzu kann in der Pulverentnahmestation beispielsweise eine Lochplatte vorgesehen sein, die von einer Vibrationseinheit in Schwingungen versetzt werden kann. Auch kann das so entfernte Pulver mit Hilfe eines Siebs von thermisch geschädigten oder agglomerierten Pulverresten befreit werden.

Nach einer weiteren vorteilhaften Ausführungsform kann das abgezogene Pulver einer Mischeinrichtung zugeführt werden, in der das Pulver mit neuem Pulver gemischt wird. Diese Pulvermischung kann dann dazu verwendet werden, erneut ein additives Herstellungsverfahren durchzuführen.

Nach einem weiteren Aspekt der vorliegenden Erfindung betrifft diese eine Vorrichtung, die insbesondere zur Durchführung eines Verfahrens der vorstehend beschriebenen Art geeignet ist. Eine solche Vorrichtung umfasst insbesondere eine Übergabestation, eine Entpulverungsstation und eine Transporteinrichtung zwischen Übergabestation und Entpulverungsstation. Hierbei ist die Übergabestation mit einer Hubeinrichtung versehen, die eingerichtet und ausgebildet ist, einen Pulverkuchen mit darin befindlichen additiv gefertigten Bauteilen aus einem Baujobbehälter in eine Einfassung zu überführen. Die Einfassung kann dabei an der Transporteinrichtung montiert sein, um einen in der Einfassung befindlichen Pulverkuchen zu der Entpulverungsstation zu transferieren. Schließlich kann die Entpulverungsstation mit einem Vertikalschwinger versehen sein, der einen in der Einfassung befindlichen Pulverkuchen ausschließlich in vertikaler Richtung in Schwingungen versetzt. Durch eine solche Vorrichtung ergeben sich die eingangs bereits geschilderten Vorteile.

Nach einer vorteilhafte Ausführungsform kann die Einfassung keinen Boden besitzen und/oder die Transporteinrichtung kann einen Transporttisch zwischen Übergabestation und Entpulverungsstation aufweisen, auf dem der Pulverkuchen während des Transports gleitet. In diesem Fall dient die Einfassung sozusagen als stabilisierende Umhüllung des Pulverkuchens, die diesen umgibt und stabilisiert, während der Pulverkuchen von der Übergabestation über den Transporttisch zu der Entpulverungsstation geschoben wird.

Nach einer vorteilhaften Ausführungsform kann die Vorrichtung eine Pulverentnahmestation aufweisen, wobei diese insbesondere zwischen der Übergabestation und der Entpulverungsstation angeordnet ist. Eine solche Anordnung bringt den Vorteil mit sich, dass nach der Übergabe des Pulverkuchens ein Transfer nur bis zur Pulverentnahmestation durchgeführt werden kann, so dass dort entweder eine Inspektion des Pulverkuchens oder aber auch eine manuelle Entpulverung vorgenommen werden kann. Soll die Entpulverung allerdings maschinell erfolgen, so kann der Pulverkuchen von der Übergabestation direkt zur Entpulverungsstation transferiert werden.

Nach einer vorteilhaften Ausführungsform kann die Pulverentnahmestation eine pulverdurchlässige Auflage aufweisen, beispielsweise ein Lochblech oder dergleichen, die beispielsweise an ihrer Unterseite mit einer Vibrationseinrichtung versehen ist. Durch Vibrieren dieser Auflage kann - wie vorstehend bereits beschrieben - ein fluidisiertes Pulver aus der Einfassung abfließen bzw. entfernt werden. Zusätzlich oder alternativ ist es auch möglich, das Pulver durch Absaugen zu entnehmen bzw. zu entfernen.

Nach einer weiteren vorteilhaften Ausführungsform kann die Einfassung Seitenwände aufweisen, von denen zumindest eine, insbesondere zwei oder auch alle orthogonal zu einem darin befindlichen Pulverkuchen verstellt werden können, so dass die von den Seitenwänden umgebene Fläche variiert und an den zu transportierenden Pulverkuchen angepasst werden kann. Eine Verstellung der Seitenwände kann dabei manuell oder auch automatisiert erfolgen.

Weiterhin kann die Einfassung mit einer in die Einfassung absenkbaren und insbesondere in ihrer Außenkontur veränderbaren Deckplatte versehen sein, so dass der Pulverkuchen an seiner Oberseite abgedeckt bzw. mit einer gewünschten Kraft beaufschlagt werden kann. Hierdurch ist der Pulverkuchen bei einem Transport zur Entpulverungsstation sicher gehalten. In der Entpulverungsstation kann durch die Deckplatte das Volumen innerhalb der Einfassung angepasst an die jeweilige Prozessphase verändert werden.

Nach einer weiteren vorteilhaften Ausführungsform kann die Vorrichtung zumindest eine Wägeeinrichtung aufweisen, die das Gewicht von in der Einfassung befindlichem Material detektiert. So kann beispielsweise eine Wägeeinrichtung vorgesehen sein, um das Gewicht des in die Einfassung überführten Pulverkuchens zu detektieren. Weiterhin kann im Bereich der Entpulverungsstation und/oder der Pulverentnahmestation beispielsweise an einer dort vorgesehenen Auflage, eine Wägeeinrichtung vorgesehen sein, um nach Entfernen des Pulvers aus der Einfassung das Gewicht der dort verbliebenen Bauteile zu ermitteln.

Wenn der Pulverkuchen von der Transporteinrichtung über einen Transporttisch geschoben wird, kann es vorkommen, dass auf diesem Restpulver verbleibt. Deshalb kann es vorteilhaft sein, wenn die Transporteinrichtung eine Abzugseinrichtung aufweist, die solches auf dem Transporttisch verbliebenes Pulver abzieht. Dies kann beispielsweise durch eine nachlaufende Absaugeinrichtung, beispielsweise eine Saugleiste und/oder auch durch eine nachlaufende Abzieheinheit, beispielsweise eine Bürste oder Rotationsbürste erfolgen, wobei letztere das Restpulver beispielsweise in eine Sammelrinne einkehren kann.

Nach einer weiteren vorteilhaften Ausführungsform kann die Vorrichtung insbesondere im Bereich der Pulverentnahmestation eine Absaugung aufweisen, um dort entstehenden Pulverstaub zu entfernen.

Nach einer weiteren vorteilhaften Ausführungsform ist die Vorrichtung mit einer Aufbereitungsstation versehen, die über eine Leitung mit der Pulverentnahmestation in Verbindung steht. Eine solche Aufbereitungsstation kann eine Mischeinrichtung aufweisen, die ausgebildet und eingerichtet ist, von der Pulverentnahmestation zugeführtes Pulver in einem vorbestimmten Mischungsverhältnis mit frischem Pulver zu mischen. So kann in der Aufbereitungsstation beispielsweise frisches Pulver in einem Verhältnis von 50:50 mit aus der Pulverentnahmestation rückgeführtem Pulver gemischt werden. Eine solche Mischung kann mit einer Genauigkeit von kleiner gleich 1% hergestellt und dann zur additiven Herstellung von weiteren Produkten verwendet werden.

Hierbei kann es auch vorteilhaft sein, wenn in der Aufbereitungsstation eine Konditioniereinrichtung angeordnet ist, mit der in der Aufbereitungsstation befindliches Pulver mit einer vorbestimmten Oberflächenfeuchtigkeit versehen werden kann. Dies kann beispielsweise durch Einleiten eines Gas-Dampf-Gemisches (z.B. feuchte Luft) erfolgen. Die Feuchtekonditionierung / physikalische Konditionierung kann durch eine Messung der relativen Luftfeuchtigkeit und der Temperatur im Gasraum (Atmosphäre aus Pulver und feuchter Luft) überwacht werden. Dazu kann in der Prozesssteuerung eine Sorptionsisotherme (Gleichgewichtsdaten Gas - Pulver) hinterlegt werden, die auch für verschiedene Pulver verschieden sein kann und entsprechend über die Steuerung ausgewählt werden kann. Auch können in der Aufbereitungsstation weitere Wägezellen, Volumenmessungen und/oder Fördereinrichtungen (Rohre, Ventile, Pumpen, etc.) vorhanden sein, um die Herstellung einer Pulvermischung anhand vorab eingestellter Mischparameter mit einem Zielwert zu ermöglichen.

Mit der erfindungsgemäßen Vorrichtung können verschiedene Prozessphasen beim Entpulvern durchgeführt werden, die dann in Abhängigkeit von dem jeweils zu entpulvernden Baujob mit geeigneten Parametern nacheinander und mit einem auf die jeweilige Prozessphase optimierten Parametersatz durchgeführt werden.

Der Vertikalschwinger kann beispielsweise wie folgt eingesetzt werden: Durchführung eines Frequenz-Sweep und Messung der System-Amplitude / Beschleunigung (z.B. durch einen Sensor an der Schwingplatte), Einstellen der Resonanzfrequenz und Betrieb mit Resonanzfrequenz; oder

Konstante Betriebsart; oder
Dynamisch Ansteuerung des Vertikalschwingers abhängig vom Fortschritt des Prozesses; oder
Ansteuerung gekoppelt an die System-Amplitude; oder
Ansteuerung geregelt über eine Kennlinie oder über ein selbstlernendes System (KI).
Mögliche Betriebsparameter können wie folgt gewählt sein:

$$\text{Frequenz } f = 50\text{Hz} + \text{Variation der Amplitude (A)}$$

Vibromotor (f = variabel / A = konstant)
Buttkicker (f = variabel / A = geregelt über die Leistung)
Exzenter (f = klein / A = hoch)

Mögliche Varianten des Entpulverungsvorgangs sind:
Anrütteln, Durchrütteln, Aufschwimmen, Taumelbewegung, Auf-/Abbewegung.

Randbedingungen für die Prozessphasen sind z.B.:
Baujobdaten: Höhe, Gewicht, Packungsdichte, Komplexität / Fragilität (Verhältnis Innen- und Außenflächen), Material (Polyamide, Elastomere, Metalle, gefüllte Kunststoffe), Schüttdichte, Partikelgröße, Korngrößenverteilung, Partikelform (rund, kantig), Pulverqualität ( Altpulver, Neupulver, gemischt, thermische Belastungen).

Bei bestimmten Anwendungen kann es auch vorteilhaft sein, wenn der Pulverkuchen nicht nur in vertikale, sondern auch in horizontale Schwingungen versetzt wird.

Nach einer weiteren vorteilhaften Ausführungsform kann in der Pulverentnahmestation ein Trichter vorgesehen sein, um Pulver in einen Sammelbehälter zu übergeben. Ein solcher Trichter kann auch in der Entpulverungsstation vorgesehen sein, wobei dieser während des Entpulverungsbetriebs durch ein Blech abgedeckt sein kann, um zu verhindern, dass sich die Masse des Pulverkuchens ungewünscht verändert. Ein solches Blech kann nach Beendigung des Entpulverungsvorgangs durch ein Lochblech ausgetauscht werden, um eine Pulverentnahme zu ermöglichen. Auch ist es möglich, ein Schieberblech mit einem gelochten und einem nicht gelochten Bereich vorzusehen und dieses dann entsprechend zu verschieben.

Während des Entpulverungsvorgangs kann es vorteilhaft sein, die Deckplatte und/oder Seitenwände der Einfassung zu verstellen, um das von diesen eingefasste Volumen zu vergrößern oder auch zu verkleinern. Während des Transports des Pulverkuchens von der Übergabestation zu der Entpulverungsstation kann es vorteilhaft sein, wenn die Seitenwände und/oder die Deckplatte an den Pulverkuchen angelegt werden.

Die Frequenz des Vertikalschwingers kann vorteilhaft in einem Bereich zwischen etwa 1 und 60 Hz liegen. Die Amplitude während des Entpulverungsvorgangs, d.h. die Schwingungsamplitude der Einfassung bzw. der Schwingplatte kann während der Entpulverung in einem Bereich von etwa 0,1 mm bis etwa 10 mm liegen. Hierbei handelt es sich um die Schwingungsamplitude in vertikaler Richtung. Die Schwingungsamplitude in horizontaler Richtung ist hingegen allenfalls minimal.

Es kann auch vorteilhaft sein, das von der Einfassung und der Deckplatte eingehüllte Volumen während des Entpulverungsvorgangs zu vergrößern, um ein Auflockern des Pulvers zu ermöglichen. Auch kann es vorteilhaft sein, während des Entpulverungsvorgangs zusätzliches Pulver in die Einfassung einzufüllen, um das darin befindliche Pulvervolumen zu vergrößern. Hierdurch können hohe Packungsdichten minimiert werden und es kann die Füllhöhe angepasst werden, um das Pulver durch geeignet gewählte Vibrationsparameter zum Fluidisieren zu bringen. In gleicher Weise kann es auch vorteilhaft sein, zu einer Verbesserung des Entpulverungsvorgangs Pulver aus der Einfassung zu entnehmen, um dadurch die Füllhöhe innerhalb der Einfassung zu reduzieren.

In der Pulverentnahmestation kann es vorteilhaft sein, wenn das Pulver in einem Frequenzbereich zwischen etwa 1 und 20 Hz vibriert wird, wobei die Amplitude zwischen etwa 0,1 mm und etwa 50 mm liegen kann. Auch kann es vorteilhaft sein, zur Entnahme des Pulvers die Frequenz langsam von 0 Hz auf einen Sollwert zu erhöhen, um ein abruptes Aufschaukeln zu verhindern.

Beim Beenden des Entpulverungsvorgangs und/oder des Pulverentnahmevorgangs kann es vorteilhaft sein, wenn die Frequenz der Vibration abrupt auf 0 Hz gesenkt wird und durch die Bremswirkung eines Vibrationsmotors ein Aufschaukeln verhindert wird. Zur Erzeugung der ausschließlich vertikalen Schwingungen können zumindest zwei, aber auch mehr Vibromotoren vorgesehen sein.

Es können beispielsweise voreingestellte die Programme für verschiedene Entpulverungsergebnisse von "ultra soft" bis "hart" vorgegeben werden. Beispielsweise: ultra soft: Dauer: 30s, Frequenz: 20Hz, Amplitude: 0,25mm - hart: Dauer: 15min, Frequenz: 60Hz, Amplitude: 3mm). Grundsätzlich kann der gleiche Baujob aus dem gleichen Material in verschiedene Druckhärten gedruckt werden. Ist ein Baujob härter, so kann es vorteilhaft sein, auch eine härtere Entpulverung vorzunehmen. Das Gleiche gilt auch generell für die Druckhöhe (höher = härter).

Es kann vorteilhaft sein, wenn die Aufbereitungsstation einen Mischbehälter aufweist, der eine untere verschließbare Öffnung besitzt. In der Öffnung kann sich ein Lochgitter befinden und/oder die Öffnung kann durch ein abdichtendes Scheibenventil verschlossen werden. Auch kann zum Verschließen der Öffnung eine verfahrbare Platte verwendet werden.

Weiterhin kann in der Aufbereitungsstation ein Sieb vorgesehen sein, auf welches Altpulver und Frischpulver gefördert wird. Das Sieb kann sich über dem Mischbehälter befinden und zwischen Sieb und Mischbehälter kann ein Materialbunker für Altpulver und/oder Neupulver vorgesehen sein.

Die Mischeinrichtung kann zwei Dosiereinheiten aufweisen, beispielsweise Zellradschleusen. Auch kann es vorteilhaft sein, wenn der Mischbehälter eine Wägezelle aufweist. Sofern zwei Zellradschleusen vorgesehen werden, kann ein exaktes Mischungsverhältnis zwischen Altpulver und Neupulver eingestellt werden. In der Aufbereitungsstation kann ein Förder- und Siebprozess beginnen, sobald die Füllmenge in Zwischentanks der Aufbereitungsstation nicht ausreicht. Das Altpulver und das Neupulver können über Förderpumpen auf die Siebe gefördert werden, wobei auch das gesiebte Pulver in die jeweiligen Zwischentanks gesiebt werden kann.

Das Fördern von gesiebtem Pulver in den Aufbereitungsstation kann dann enden, sobald eine Wägezelle die gewünschte Masse bzw. den gewünschten Füllstand anzeigt.

Im Bereich der Einfassung und/oder an der Schwingplatte kann eine Wägezelle und/oder ein Sensor für die Vertikalamplitude der Schwingung angeordnet sein. Auch kann im Bereich der Einfassung ein Füllstandssensor vorgesehen sein.

Nachfolgend wird die vorliegende Erfindung rein beispielhaft anhand vorteilhafter Ausführungsformen und unter Bezugnahme auf die beigefügten Zeichnungen beschrieben. Es zeigen:

Fig. 1     eine Vorderansicht einer Entpulverungsanlage; und
Fig. 2     eine perspektivische teilgeschnittene Ansicht eines Teils der Entpulverungsanlage von Fig. 1.

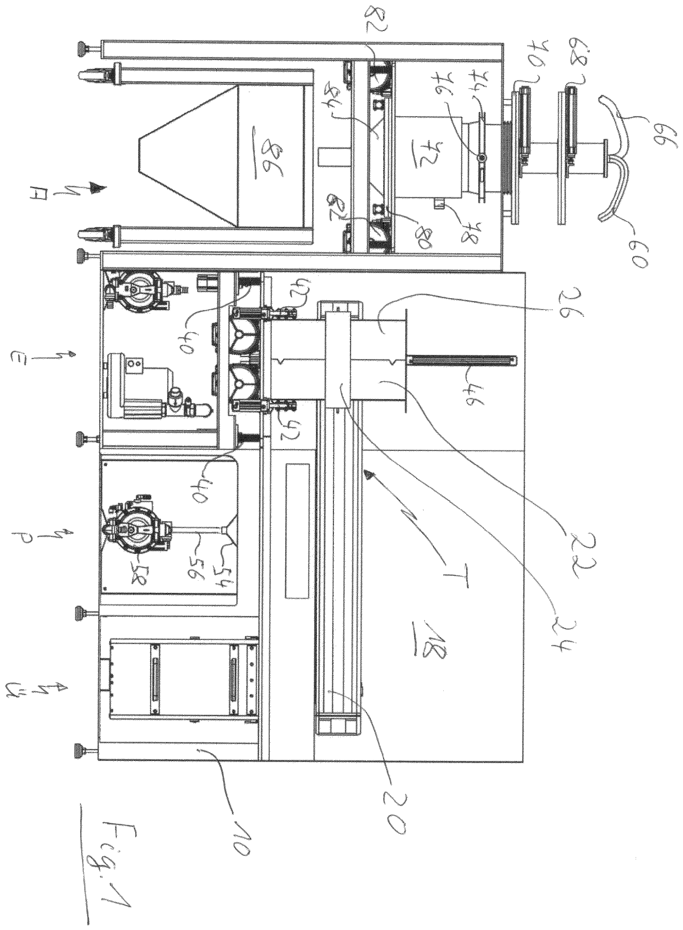

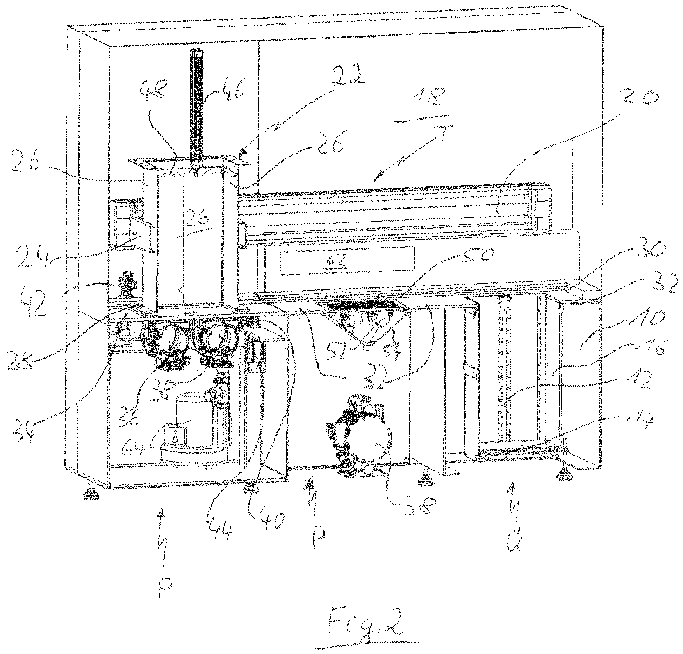

Das in den Fig. 1 und 2 dargestellte Ausführungsbeispiel einer beispielhaften Entpulverungsanlage umfasst eine Übergabestation Ü, eine Pulverentnahmestation P, eine Entpulverungsstation E und eine Aufbereitungsstation A, die in der genannten Reihenfolge nebeneinander angeordnet sind. Hierbei sind die Übergabestation Ü, die Pulverentnahmestation P und die Entpulverungsstation E auf einem gemeinsamen Grundgestell 10 nebeneinander angeordnet. Die Aufbereitungsstation A kann sich neben dem Grundgestell 10 befinden, muss jedoch nicht unmittelbar an dieses angrenzend angeordnet sein.

Die Übergabestation Ü besitzt einen zum Aufstellungsboden nach unten hin offenen Freiraum, in den ein (nicht dargestellter) Baujobbehälter eingefahren werden kann, um einen in dem Baujobbehälter befindlichen Pulverkuchen mit einem oder mehreren darin befindlichen additiv gefertigten Bauteil(en) zu übergeben. Hierzu weist die Übergabestation Ü eine Hubeinrichtung 12 mit einer Bodenplatte 14 auf, mit welcher der Pulverkuchen übergeben werden kann. Anschließend wird die Hubeinrichtung 12 betätigt, so dass der Pulverkuchen innerhalb eines Schachtes 16 der Übergabestation Ü vertikal nach oben gefahren werden kann. Es versteht sich, dass die Übergabe auch in horizontaler Richtung oder von oben nach unten erfolgen könnte.

Wie die Figuren weiterhin zeigen, sind die Übergabestation Ü, die Pulverentnahmestation P und die Entpulverungsstation E mit einer gemeinsamen Transporteinrichtung T versehen, die sich in horizontaler Richtung von der Übergabestation Ü bis zur Entpulverungsstation E erstreckt und einen an einer Rückwand 18 der Anlage befestigten Linearantrieb 20 umfasst. Mit diesem Linearantrieb 20 kann eine Einfassung 22 zwischen den einzelnen Stationen verschoben werden, die beispielsweise über einen Halterahmen 24 an dem Linearantrieb 20 befestigt ist. Alternativ ist es auch möglich, statt des Halterahmens zu beiden Seiten der Einfassung 22 jeweils einen Bügel vorzusehen, der zur Einfassung etwas beabstandet ist, und der mit Hilfe des Linearantriebs 20 die Einfassung 22 verschieben kann.

Der Halterahmen 24 ist an der Einfassung 22 federnd befestigt oder umgibt diese mit etwas Spiel, so dass sich Schwingungen der Einfassung 22 nicht auf den Halterahmen 24 übertragen. Weiterhin umfasst die Einfassung 22 Seitenwände 26, die verstellbar ausgebildet sein können, um die von den Seitenwänden 26 eingeschlossene Fläche zu variieren. An der Unterseite der Einfassung 22 ist diese mit einem Flansch 28 versehen, der in zwei parallel beabstandete Laufschienen 30 eingreift. Hierdurch kann die Einfassung 22 auf einem Transporttisch 32 gleiten, der sich zwischen der Übergabestation Ü und der Pulverentnahmestation P erstreckt. Im Bereich der Pulverentnahmestation P schließt sich an den Transporttisch 32 bündig eine Schwingplatte 34 an, an deren Unterseite beispielsweise zwei gegenläufig rotierende Vibromotoren 36 und 38 befestigt sind, mit deren Hilfe die Schwingplatte 34 in ausschließlich vertikale Schwingungen versetzt werden kann. Hierzu ist die Schwingplatte 34 über mehrere Federn 40 auf dem Grundgestell 10 gelagert, so dass die Schwingplatte 34 zusammen mit der Einfassung 22 und dem darin befindlichen Pulverkuchen in vertikaler Richtung frei schwingen kann. Um dabei eine feste Verbindung zwischen Einfassung 22 und Schwingplatte 34 zu gewährleisten, sind im Bereich der Schwingplatte 34 mehrere beispielsweise pneumatisch betätigbare Klemmhebel 42 vorgesehen, mit denen die Einfassung 22 fest an der Schwingplatte 34 verankert werden kann. Für eine vertikale Verschiebung der Schwingplatte 34 relativ zu dem Transporttisch 32 sind Stellglieder 44 vorgesehen, mit denen die Schwingplatte 34 auf das Niveau des Transporttisches 32 angehoben werden kann, wenn sich diese durch das Gewicht des Pulverkuchens nach unten bewegt haben sollte.

An der Oberseite der Einfassung 22 ist weiterhin ein Linearantrieb 46 vorgesehen, mit dem eine in ihrer Außenkontur vorzugsweise verstellbare Deckplatte 48 in die Einfassung 22 eingeschoben werden kann.

Um einen Pulverkuchen mit darin befindlichen Bauteilen aus einem (nicht dargestellten) Baujobbehälter in die Entpulverungsstation E zu überführen, wird zunächst die (leere) Einfassung 22 mit Hilfe des Linearantriebs 20 in die äußerste rechte Position gefahren, so dass sich die Einfassung 22 über dem Schacht 16 der Übergabestation Ü befindet. Anschließend wird die Hubeinrichtung 12 betätigt, so dass sich die Bodenplatte 14 mit dem darauf befindlichen Pulverkuchen anhebt und diesen von unten in die Einfassung 22 einschiebt. Hierbei ist es besonders vorteilhaft, wenn die Außenkontur der Einfassung 22 nur unwesentlich größer als die Außenkontur des Pulverkuchens ist. Nachdem die Bodenplatte 14 das Niveau des Transporttisches 32 erreicht hat, kann der Pulverkuchen innerhalb der Einfassung 22 über den Transporttisch 32 auf die Schwingplatte 34 geschoben werden. Hierbei können die Stellglieder 44 dafür sorgen, dass sich bei diesem Vorgang die Schwingplatte 34 nicht absenkt. Vor dem Transport kann es vorteilhaft sein, wenn die Seitenwände 26 und/oder die Deckplatte 48 an den Pulverkuchen innerhalb der Einfassung 22 angestellt werden, um dessen äußere Form beizubehalten, bis dieser die Entpulverungsstation E erreicht hat.

In der Entpulverungsstation E werden anschließend die Klemmhebel 42 aktiviert bzw. gespannt, so dass die Einfassung 22 fest mit der Schwingplatte 34 verbunden ist. Nach Absenken der Stellglieder 44 kann anschließend der Schwingungserzeuger (Vertikalschwinger) aktiviert werden, der bei dem dargestellten Ausführungsbeispiel die beiden Vibromotoren 36 und 38 umfasst. Diese werden von einer nicht dargestellten Steuerung angesteuert, die wiederum mit einer Prozesssteuerung verbunden ist, um die eingangs genannten Prozessphasen in gewünschter Weise zu durchlaufen. Bei Aktivierung der Schwingungserzeuger 36, 38 wird die Schwingplatte 34 ausschließlich in vertikaler Richtung mit vertikaler Amplitude in Schwingung versetzt, wobei diese nicht auf das Grundgestell 10 oder die Transporteinrichtung T übertragen werden. Hierbei verbleibt das gelöste Pulver in der Einfassung 22.

Nach Durchführung des Entpulverungsvorgangs kann die Einfassung 22 dann mit Hilfe des Linearantriebs 20 zurück zu der Pulverentnahmestation P gefahren werden. In der Pulverentnahmestation P weist der Transporttisch 32 eine der Grundfläche der Einfassung 22 entsprechende Aussparung auf, in der eine mit Öffnungen versehene Platte 50 bündig angeordnet ist, an deren Unterseite eine weitere Vibrationseinrichtung 52 befestigt ist, mit der die gefedert gelagerte Platte 50 in Schwingung versetzt werden kann, um fluidisiertes Pulver aus der Einfassung 22 in einen Trichter 54 unterhalb der Aussparung abfließen zu lassen. Der Boden des Trichters 54 ist über eine Leitung 56 mit einer Pulverpumpe 58 verbunden, die das abgezogene Pulver über eine Leitung 60 (Fig. 1) der Aufbereitungsstation A zuführt.

Im Bereich der Pulverentnahmestation P ist an der Rückwand 18 des Gestells 10 eine Staubabsaugung 62 vorgesehen. Das Bezugszeichen 64 bezeichnet eine im Bereich der Entpulverungsstation E angeordnete Frischpulverpumpe, mit der frisches Pulver über eine Leitung 66 der Aufbereitungsstation A zugeführt werden kann.

In der Aufbereitungsstation A kann das von der Pulverentnahmestation P über die Leitung 60 gelangte Pulver sowie frisches über die Leitung 66 zugeführte Pulver dosiert und vermischt werden. Hierzu sind unterhalb der Leitungen 60 und 66 zwei voneinander beabstandete Schieber 68 und 70 vorgesehen, mit denen das jeweils zugeführte Pulver dosiert in einen Mischbehälter 72 gegeben werden kann, dem ein optionales Sieb 74 vorgeschaltet ist. Im Bereich des Siebs kann ferner ein Ultraschallschwinger 76 vorgesehen sein, um ein Durchmischen des Pulvers zu begünstigen. Das Bezugszeichen 78 im Bereich des Mischbehälters 72 bezeichnet eine Konditioniererereinrichtung, mit der beispielsweise feuchte Luft in den Mischbehälter 72 zugeführt werden kann, um das darin befindliche Pulver mit einer vorbestimmten Oberflächenfeuchtigkeit zu versehen.

Der Mischbehälter 72 ist wiederum auf einer Schwingplatte 80 angeordnet, die federnd gelagert ist und an deren Unterseite sich Vibrationsmotoren 82 befinden, um ein Durchmischen des im Mischbehälter 72 befindlichen Pulvers zu erzielen.

Unterhalb des Mischbehälters 72 kann das gemischte Pulver dann über einen Trichter 84 in einen bereitgestellten Transportbehälter 86 abgelassen werden.

An allen Schwingplatten der beschriebenen Anlage können Wägezellen oder andere Wägesensoren vorgesehen sein, um das Gewicht des Pulverkuchens oder der vom Pulver befreiten Bauteile zu erfassen. Auch kann an der Bodenplatte 14 der Übergabeeinheit Ü ein Wägesensor angeordnet sein.

**Patentansprüche**

1.  Verfahren zum Entpulvern von in einem Pulverkuchen befindlichen additiv gefertigten Bauteilen, wobei der Pulverkuchen zunächst in eine Einfassung (22) transferiert wird und in einer Entpulverungsstation (E) innerhalb der Einfassung (22) durch einen Schwingungserzeuger (36, 38) ausschließlich in vertikaler Richtung in Schwingungen versetzt wird.

2.  Verfahren nach Anspruch 1,
    **dadurch gekennzeichnet,**
    **dass** der Pulverkuchen mittels einer Hubeinrichtung (12) aus einem Baujobbehälter in die Einfassung (22) überführt wird.

3.  Verfahren nach Anspruch 1 oder 2,
    **dadurch gekennzeichnet,**
    **dass** die Einfassung (22) mit darin befindlichem Pulverkuchen von einer Transporteinrichtung (T) in die Entpulverungsstation (E) überführt wird.

4.  Verfahren nach einem der vorstehenden Ansprüche,
    **dadurch gekennzeichnet,**
    **dass** die Einfassung (22) in der Entpulverungsstation (E) an einer Schwingplatte (34) verankert wird, an der sich der Schwingungserzeuger (36, 38) befindet.

5.  Verfahren nach einem der vorstehenden Ansprüche,
    **dadurch gekennzeichnet,**
    **dass** der Pulverkuchen innerhalb der Einfassung (22), insbesondere während des Entpulverns, mit einer Deckplatte (48) beaufschlagt wird.

6.  Verfahren nach einem der vorstehenden Ansprüche,
    **dadurch gekennzeichnet,**
    **dass** die entpulverten Bauteile nach der Entpulverung gewogen werden, und/oder dass optional der Pulverkuchen vor der Entpulverung gewogen wird und/oder das von den Bauteilen entfernte Pulver gewogen wird.

7.  Verfahren nach einem der vorstehenden Ansprüche,
    **dadurch gekennzeichnet,**
    **dass** in der Entpulverungsstation (E) zumindest eine, insbesondere zumindest drei der folgenden Prozessphasen durchgeführt werden: Aufbrechen des Pulverkuchens in Bruchstücke, Deagglomerieren der Bruchstücke, Pulverisieren von an den Bauteilen anhaftendem Pulvermaterial, Fluidisieren des Pulvers, Separieren der Bauteile von Pulvermaterial.

8. Verfahren nach Anspruch 7,
**dadurch gekennzeichnet,**
**dass** zum Separieren der Bauteile Frequenz und Amplitude des Schwingungserzeugers (36, 38) so eingestellt werden, dass die Bauteile auf dem von den Bauteilen gelösten Pulver aufschwimmen.

9. Verfahren nach einem der vorstehenden Ansprüche,
**dadurch gekennzeichnet,**
**dass** die Einfassung (22) von einer Transporteinrichtung (T) in eine Pulverentnahmestation (P) überführt wird und erst dort das von den Bauteilen gelöste Pulver aus der Einfassung (22) abgezogen wird, wobei das abgezogene Pulver insbesondere einer Mischeinrichtung (72) zugeführt wird, in der dieses mit neuem Pulver gemischt wird.

10. Vorrichtung, insbesondere zur Durchführung eines Verfahrens nach einem der vorstehenden Ansprüche, umfassend eine Übergabestation (Ü), eine Entpulverungsstation (E) und eine Transporteinrichtung (T) zwischen Übergabestation (Ü) und Entpulverungsstation (E), wobei

   - die Übergabestation (Ü) mit einer Hubeinrichtung (12) versehen ist, die eingerichtet und ausgebildet ist, einen Pulverkuchen mit darin befindlichen additiv gefertigten Bauteilen aus einem Baujobbehälter in eine Einfassung (22) zu überführen,
   - die Einfassung (22) an der Transporteinrichtung (T) montiert ist, um einen darin befindlichen Pulverkuchen zu der Entpulverungsstation (E) zu transferieren, und
   - die Entpulverungsstation (E) mit einem Schwingungserzeuger (36, 38) versehen ist, der einen in der Einfassung (22) befindlichen Pulverkuchen ausschließlich in vertikaler Richtung in Schwingungen versetzt.

11. Vorrichtung nach Anspruch 10,
**dadurch gekennzeichnet, dass**
die Einfassung (22) keinen Boden aufweist und die Transporteinrichtung (T) einen Transporttisch (32) zwischen Übergabestation (Ü) und Entpulverungsstation (E) aufweist, auf dem der Pulverkuchen während des Transports gleitet, wobei die Transporteinrichtung (T) insbesondere eine Abzugseinrichtung aufweist, die auf dem Transporttisch verbliebenes Pulver abzieht.

12. Vorrichtung nach Anspruch 10 oder 11,
**dadurch gekennzeichnet, dass**
diese eine Pulverentnahmestation (P) aufweist, die insbesondere zwischen der Übergabestation (Ü) und der Entpulverungsstation (E) angeordnet ist, wobei die Pulverentnahmestation (P) insbesondere eine pulverdurchlässige Auflage (50) aufweist, die mit einer Vibrationseinrichtung (52, 54) versehen ist.

13. Vorrichtung nach einem der vorstehenden Ansprüche 10 - 12,
**dadurch gekennzeichnet, dass**
die Einfassung (22) Seitenwände (26) aufweist, von denen zumindest eine verstellbar ist, um die von den Seitenwänden (26) umgebene Fläche zu variieren, wobei die Einfassung (22) insbesondere mit einer in die Einfassung (22) absenkbaren Deckplatte (48) versehen ist.

14. Vorrichtung nach einem der vorstehenden Ansprüche 10 - 13,
**dadurch gekennzeichnet, dass**
diese zumindest eine Wägeeinrichtung aufweist, die das Gewicht von in der Einfassung (22) befindlichem Material detektiert.

15. Vorrichtung nach Anspruch 12,
**dadurch gekennzeichnet, dass**
diese eine Aufbereitungsstation (A) aufweist, die über eine Leitung (60) mit der Pulverentnahmestation (P) in Verbindung steht, wobei die Aufbereitungsstation (A) eine Mischeinrichtung (70) aufweist, die ausgebildet und eingerichtet ist, von der Pulverentnahmestation (P) zugeführtes Pulver in einem vorbestimmten Mischungsverhältnis mit frischem Pulver zu mischen, wobei insbesondere in der Aufbereitungsstation (A) eine Konditionierungseinrichtung (78) angeordnet ist, mit der in der in der Aufbereitungsstation (A) befindliches Pulver mit einer vorbestimmten Oberflächenfeuchtigkeit versehen werden kann.

Fig. 1

Fig. 2

Europäisches
Patentamt

European
Patent Office

Office européen
des brevets

# EUROPÄISCHER RECHERCHENBERICHT

**Nummer der Anmeldung**

EP 24 20 9766

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2023/150203 A1 (HUTCHINSON DANIEL JOSHUA [US] ET AL) 18. Mai 2023 (2023-05-18) * Absätze [0002], [0029], [0039], [0030], [0005], [0040]; Abbildungen 3,8A-8C,9 * * Absatz [0049] - Absatz [0066] * ----- | 1-15 | INV. B08B7/02 B29C64/35 |
| X | DE 10 2017 220640 A1 (VOLKSWAGEN AG [DE]) 23. Mai 2019 (2019-05-23) * Absätze [0001], [0007], [0022]; Abbildung 1 * ----- | 1,10 | |
| X,P | WO 2024/010691 A1 (POSTPROCESS TECH INC [US]) 11. Januar 2024 (2024-01-11) * Absätze [0002], [0006], [0023], [0007]; Abbildungen 1,8 * * Absatz [0036] - Absatz [0041] * ----- | 1,10 | |
| | | | RECHERCHIERTE SACHGEBIETE (IPC) B08B B29C |

Der vorliegende Recherchenbericht wurde für alle Patentansprüche erstellt

| Recherchenort | Abschlußdatum der Recherche | Prüfer |
|---|---|---|
| Den Haag | 1. April 2025 | Delval, Stéphane |

EPO FORM 1503 03.82 (P04C03)

**EP 4 552 758 A1**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-04-2025

| Im Recherchenbericht angeführtes Patentdokument | Datum der Veröffentlichung | Mitglied(er) der Patentfamilie | Datum der Veröffentlichung |
|---|---|---|---|
| US 2023150203 A1 | 18-05-2023 | EP 4135968 A1 | 22-02-2023 |
| | | JP 2023523553 A | 06-06-2023 |
| | | KR 20230004490 A | 06-01-2023 |
| | | US 2023150203 A1 | 18-05-2023 |
| | | WO 2021211658 A1 | 21-10-2021 |
| DE 102017220640 A1 | 23-05-2019 | KEINE | |
| WO 2024010691 A1 | 11-01-2024 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3565706 A